(19) **Europäisches Patentamt / European Patent Office / Office européen des brevets**

(11) **EP 2 073 374 B1**

(12) **EUROPEAN PATENT SPECIFICATION**

(45) Date of publication and mention
of the grant of the patent:
**15.02.2012 Bulletin 2012/07**

(51) Int Cl.:
***H02P 23/00*** *(2006.01)*

(21) Application number: **07123404.1**

(22) Date of filing: **17.12.2007**

(54) **Apparatus to control torque harmonics in PWM converters and related methods**

Vorrichtung zur Steuerung der Drehmomentoberschwingungen in PWM-Wandlern und dazugehörige Verfahren

Appareil de contrôle des harmoniques de couple dans des convertisseurs PWM et procédés associés

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**24.06.2009 Bulletin 2009/26**

(73) Proprietor: **GENERAL ELECTRIC COMPANY Schenectady, NY 12345 (US)**

(72) Inventors:
• **Song, Joseph**
  **Lasalle PQ Ontario H8N 1M9 (CA)**
• **Sihler, Christof**
  **85399 Hallbergmoos (DE)**
• **Schroeder, Stefan**
  **80797 München (DE)**

• **Vyas, Parag**
  **80797 Munich (DE)**
• **Geyer, Tobias**
  **88400 Biberach (DE)**

(74) Representative: **Bedford, Grant Richard Global Patent Operation - Europe GE International Inc. 15 John Adam Street London WC2N 6LU (GB)**

(56) References cited:
EP-A- 1 480 328     JP-A- 11 098 848
JP-A- 62 032 378    JP-A- 2000 083 324
JP-A- 2002 325 472  US-A1- 2001 011 877
US-A1- 2003 154 041 US-A1- 2004 207 360
US-A1- 2007 194 745

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The embodiments disclosed relate generally to PWM converters and more particularly to apparatuses and methods to control torque harmonics in PWM converters.

Machine drives and generators are typically connected to a mechanical shaft, which may exhibit resonance at one or more critical frequencies. If the electric machine produces a torque component at one such critical frequency, then torque oscillations will result in the shaft, which can lead to an increase in fatigue and reduction in life of the shaft. In highly underdamped systems, peak torque values may be observed, which can directly lead to damage of the shaft. The source of the torque components can be voltage harmonics present due to the nature of output modulators in Pulse-Width-Modulation (hereinafter, PWM) converters or due to the presence of other current or voltage disturbances within the electrical network in connection with the machine. US 20040207360 discloses a PWM motor control which computes the carrier frequency of the PWM signal on the basis of the motor speed.

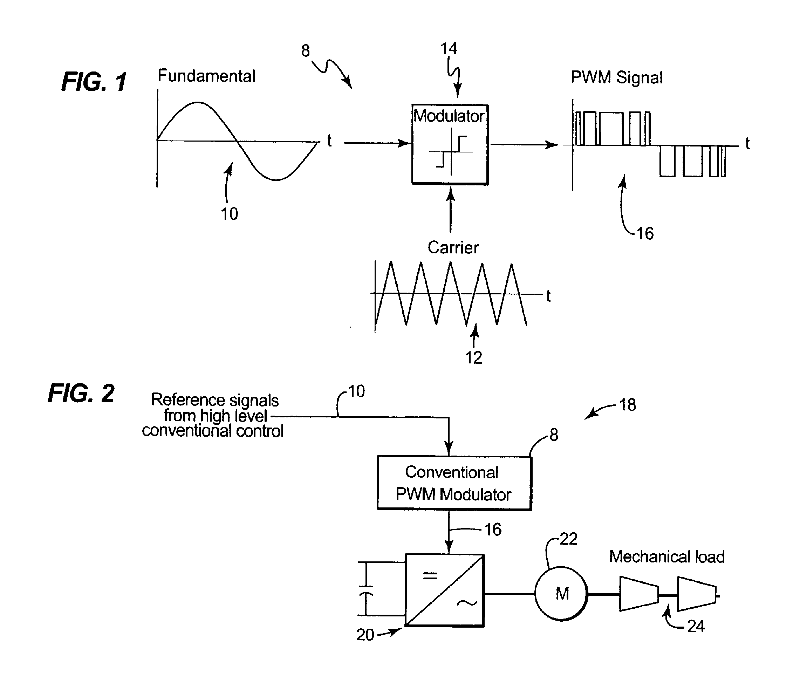

FIG. 1 illustrates a conventional PWM modulator 8 used to generate an exemplary sinusoidal output signal. As understood by those of ordinary skill, the process illustrated in FIG. 1 is illustrative only and is not to be considered limiting to the different embodiments disclosed herein in any way. As shown, a fundamental, or reference, analog signal 10 is compared with one or more carrier signals 12 in a modulator 14 to generate a discrete PWM signal, or pulse sequence, 16. As shown in FIG. 2, in a conventional PWM drive system 18, the PWM modulator 8 receives the reference signal 10 from a high-level conventional control block (not shown) and processes the same to generate the discrete PWM signals 16 that are used to turn on and off power electronic switches 20 controlling the electrical power to drive a motor 22 connected to a mechanical load 24. For some operating points at a given switching frequency, the motor torque applied to the shaft by the drive system might have some harmonics components which coincide with natural frequencies of the drive train.

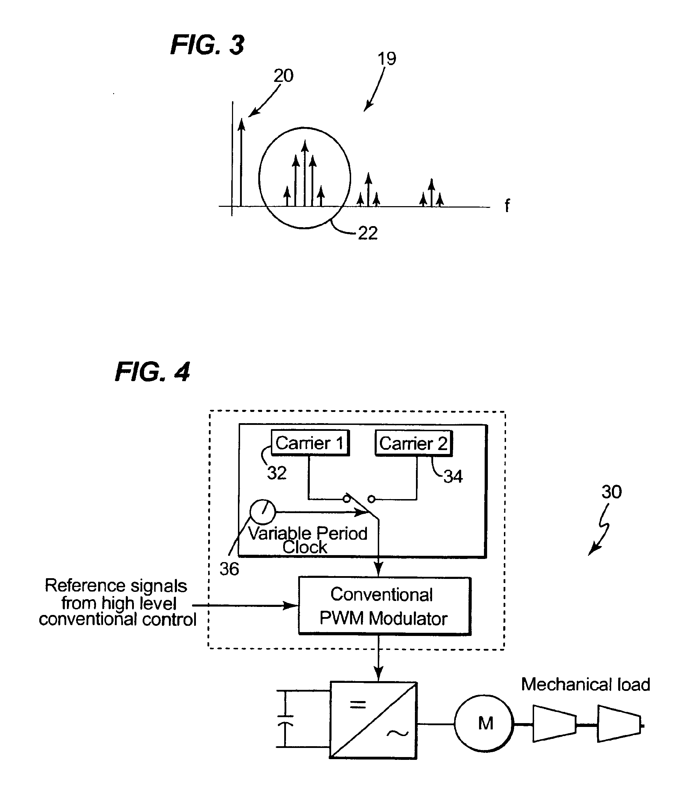

FIG. 3 shows a frequency spectrum 19 of the PWM signal 16 of FIGS. 1 and 2. As understood by those of ordinary skill and also shown in FIGS. 1 and 3, power electronic converters based on switching devices generate voltages at discrete levels. In addition to a desired voltage signal 20 at a fundamental frequency, unwanted harmonic components 22 are also present. These harmonics can lead to requirements for higher ratings of electrical components, increased losses in electrical machinery, and reduced lifetimes in motors and generators or in mechanical shafts in machine drive systems. Most importantly, by exciting the eigenmodes of such a mechanical system, these harmonics can lead to resonant instabilities and emergency tripping of the drive. In general, the harmonic frequencies can be relatively high, and passive filters can be used to attenuate the amplitudes. However, lower frequency harmonics, also termed beat harmonics or beat frequencies, can also be present and are more difficult to reduce with passive filters since they are closer to the required voltage bandwidth. These beat frequencies can lead to serious damage in the case of machine drive systems which are underdamped and where the resonant frequency of the mechanical shaft is close to that of the beat frequency harmonics. These beat components can occur at frequencies both at above and below the fundamental frequency. Many converters operate with a synchronous PWM strategy, where the carrier frequency is a fixed integer multiple of the output fundamental frequency of the converter. However, this is not desirable when operating at low fundamental frequencies since the switching frequency is constrained to low values leading to poor harmonic performance.

In power systems in which the amount of generated power is relatively small compared to the mechanical loads and little rotational inertia exists at the generators relative to the loads, even small disturbances, such as torque harmonics generated by large PWM converters, can cause electromechanical interactions with the rotor shaft assembly of the generators, thus affecting the overall reliability of the system. This electromechanical interaction can also be seen in large PWM converters driving high power trains at variable speed, e.g. compressor drive trains. As understood by those of ordinary skill, the identification and elimination of only small disturbances causing torsional issues can be time consuming and costly.

Conventional countermeasures to the above-noted challenges are based on increasing the frequency of low order torque harmonics (e. g. by increasing the converter switching frequency) or decreasing their amplitude (e. g. by multi-level converter topologies). That is, conventional countermeasures against torsional resonance problems are based on eliminating the source of resonance excitation, e.g. changing network, operational or control parameters (so that the torque spectrum is changed). In power systems with large variable speed drives the mechanical and electrical dynamics are increasingly coupled (with increasing rating of the electrical motors and complexity of the power system), thus making it more difficult to suppress torsional oscillations only by means of conventional countermeasures. For instance, when changing the torque spectrum of the converter, other resonance points existing in the network may still be excited, especially when the frequency of the torque harmonics vary with the speed of a variable speed drive (hereinafter, VSD).

Another conventional countermeasure against torsional issues is to reduce the amplitude of the single low frequency torque harmonics by control loops within the drive control system. If a measurement of the mechanical torque exists (or a reliable observer for the torque), the torsional issues can also be suppressed by an active torsional mode damping. All these methods require a detailed analysis of the total system, a control system design and the availability of input signals from sensors that precisely monitor the dynamics of the rotor shaft system of the respective drive system. Even though an active control of low order torque harmonics or an active damping control can be found in the literature, such systems are not state of the art for most existing large drives because the realization of such countermeasures is difficult. More commonly addressed is therefore the approach to avoid torsional issues by realizing PWM converters with low magnitude of the pulsating torque at the critical frequency. But this requires complex converter topologies or high switching frequencies, resulting in expensive systems and/or overall reduced reliability.

Yet another conventional countermeasure technique can be compared to selective harmonic elimination where PWM pulse patterns are optimized directly offline for synchronous switching patterns. This is incorporated into medium voltage drives and is implemented only at synchronous switching patterns. The fundamental frequency and even the PWM carrier frequency can change. This technique may be implemented online with an adjustment to the reference signal. In addition, other methods of changing the carrier phase and frequency in a deterministic or in a random manner exist. However, these methods do not eliminate the harmonic, but rely on the fact that, although the critical harmonics may exists at many instants, for an average measurement taken over a period, the components may be small or zero.

In all of the above-summarized conventional cases it is still possible to excite resonant modes in the shaft, albeit for short periods of time, leading to increased fatigue and a decrease in lifetime. Other solutions exist for associated converter harmonic problems, but they do not address the issue of these beat frequency harmonics. An example is that of compensation methods which are used to reduce the effect of dead-time distortion in which the finite turn-off and turn-on time and the direction of the current produce additional harmonics at integer multiples of the fundamental frequency, and which can be compensated by feedback control of voltage or current. Passive devices may be used to filter harmonics, but these are effective only for high frequencies.

It would therefore be desirable to eliminate and/or substantially reduce beat frequency harmonics in any PWM modulation strategy to solve torsional issues without the use of a feedback signal in new PWM drive system and/or as an add-on in existing systems so as to be adapted to any mechanical drive train with one or more resonant frequencies and/or variable frequency power electronic converters, operating with a synchronous and/or asynchronous PWM strategy. Industrial applications that may benefit from the disclosed embodiments include, but are not limited to converter drives for electric machines for compressors in the oil and gas industry, and frequency converters connected to generators in variable speed wind turbines.

According to various aspects of the present invention, PWM converters and associated methods are disclosed capable of avoiding torsional issues by periodically changing the phase angle of the torque harmonics and/or predicting beat-frequency components and generating additional perturbations to the modulation strategy so as to eliminate and/or substantially reduce beat-frequency components using a reduced technical effort than that required for conventional countermeasures. Relatively simple converter topologies can be used to drive large motor trains if torsional vibrations can be excluded because the modulation scheme of the inverter changes within the first periods of a growing torsional vibration. The same applies to the grid side of the converter. If phase magnitude or additive perturbation control is also applied to the grid side rectifier, torsional interactions with the generators feeding the network can be avoided.

One or more of the above-summarized needs or others known in the art are addressed by PWM processors that include a modulator unit and a carrier signal generator unit that generates first and second carrier signals, the modulator unit generating a PWM signal corresponding to a reference signal supplied thereto by alternatively using the first and second carrier signals.

PWM processors are also disclosed that include a modulator unit, a carrier signal generator, a perturbation unit, and a beat frequency component predicting unit. In such PWM processors, a frequency component of a reference signal corresponding to a beat frequency is removed by adding to the reference signal a perturbation signal of suitable amplitude and phase such that the beat frequency of the mechanical system is not excited by the PWM signal.

PWM processors are also disclosed that include a modulator unit, a carrier signal generator, and means for removing torque harmonics from a generated PWM signal so as not to excite beat frequencies of a mechanical system driven by the generated PWM signal.

Methods of generating a PWM signal are also within the scope of the subject matter disclosed herein. Such methods include generating the PWM signal based on a reference signal and a first carrier signal and, after a time period, alternatively generating the PWM signal based on the reference signal and a second carrier signal, the first carrier signal being out of phase from the second carrier signal and the time period being smaller than a time constant of a torsional mode of a mechanical system driven by the PWM signal.

Methods of generating a PWM signal are also within the scope of the subject matter disclosed herein. Such methods include calculating a beat frequency component of a mechanical system driven by the PWM signal based on a fundamental output frequency and a frequency of a carrier signal, adding to a reference signal a perturbation signal based on the calculated beat frequency component, and generating the PWM signal such that a beat frequency of a mechanical system driven by the PWM signal is not excited.

The above brief description sets forth features of the various embodiments of the present invention in order that the detailed description that follows may be better understood, and in order that the present contributions to the art may be better appreciated. There are, of course, other features of the invention that will be described hereinafter and which will be for the subject matter of the appended claims.

A more complete appreciation of the disclosed embodiments of the invention and many of the attendant advantages thereof will be readily obtained as the same becomes better understood by reference to the following detailed description when considered in connection with the accompanying drawings, wherein:

FIG. 1 illustrates a conventional PWM process;

FIG. 2 illustrates a conventional PWM drive system utilizing the process of FIG. 1;

FIG. 3 illustrates a qualitative frequency spectrum of a PWM signal generated by the conventional PWM process of FIG. 1, including critical harmonics;

FIG. 4 illustrates a PWM drive system according to an embodiment of the subject matter disclosed;

FIG. 5 illustrates a qualitative variation of magnitude as a function of time for the carrier signals of FIG. 4;

FIG. 6 illustrates another embodiment of a PWM process according to various embodiments of the subject matter disclosed;

FIG. 7 illustrates a qualitative modified frequency spectrum of a PWM signal generated by the PWM process of FIG. 6 without critical harmonics and where the fundamental and non-critical higher order harmonics remain unaffected.

The embodiments disclosed relate generally to PWM converters and more particularly to apparatuses and methods to control torque harmonics generated by PWM converters. In one embodiment, two modulation schemes are alternately and continuously applied to the system which does not require input from measurements or observers installed in the system and only influences the phase angle of the torque harmonics generated by the converter, thus having minimum or no effect on the mechanical system. In another embodiment, the time period for alternately applying the disclosed modulation schemes is controlled in relation to the time constant of the torsional modes in the mechanical system so as to assure that no appreciable torsional oscillations evolve.

Concurrently or alternatively, another embedment of the subject matter disclosed eliminates and/or substantially reduces beat-frequency harmonics in variable frequency power electronic converters, operating with an asynchronous or synchronous pulse width modulation (PWM) strategies, by predicting the frequency, amplitude and phase angle of undesired harmonics (in a given frequency interval) and eliminating and/or substantially reducing beat-frequency components. Deterministic relationships between the fundamental output frequency and the PWM carrier frequency and data in an online environment is used to correct a reference signal by generating additional perturbations to the modulation strategy, in such a way as to eliminate the beat-frequency components. In the presence of changes in the fundamental frequency and/or the carrier frequency, the scheme adapts itself and tracks the harmonics to be eliminated.

By use of two concurrent modulation approaches and/or predicting the frequency, amplitude and phase angle of undesired harmonics improved PWM processes with reduced excitation of unwanted critical frequencies are accomplished either individually or in any combination, as will be apparent to those of ordinary skill based on the subject matter disclosed. In addition, those of ordinary skill will appreciate that the various embodiments disclosed herein are not dependent on each other, i.e., each may be implemented without the other and various combinations are within the scope of the subject matter disclosed, as it will become apparent. Referring now to the drawings, wherein like reference numerals designate identical or corresponding parts throughout the several views, several embodiments of the of the disclosed subject matter will be described.

FIG. 4 shows a diagram illustrating the general principle of implementation of one of the exemplary embodiments of the subject matter disclosed herein. What is illustrated is a control scheme for PWM converters capable of controlling the amount of phase variation in the torque harmonics. As shown, the disclosed phase-controlled PWM drive system 30 includes two modulation schemes using a first carrier signal 32 and a second carrier signal 34 that are alternately and continuously applied to the system. After evaluation of the subject matter disclosed herein, it will be appreciated by those of ordinary skill that one of the fundamental differences between the phase-controlled PWM drive system 30 and existing methods for solving torsional issues is that the disclosed system does not require input from measurements or observers installed in the system and that it only influences the phase angle of the torque harmonics generated by the converter. By applying suitable alternating phase angles, the resulting averaged magnitude of the torque harmonic can be cancelled.

When changing from the modulation based on the first carrier 32 to the other based on the second carrier 34, the phase of the torque harmonics can be shifted by a desired amount in such a way that the impact of any undesirable harmonics on the mechanical system is eliminated or substantially reduced. As appreciated by those of ordinary skill, any amount of phase shift between the first carrier signal 32 and the second carrier signal 34 is possible; however, 180° is typically favored. Harmonic frequencies are a combination of integer multiples of the fundamental frequency and an integer multiple of the carrier frequency. The same relationship holds for the phase shift of each harmonic frequency. For example:

$$f_{harmonic,nm} = n * f_{fundamental} + m * f_{carrier}$$

$$arg(f_{harmonic,nm}) = n * arg(f_{fundamental}) + m * arg(f_{carrier}),$$

where f stands for frequency and arg ( ) denotes the phase, n and m are various combinations of integers that are characteristic for each PWM scheme. For all odd multiples of the carrier frequencies, a shift of the carrier frequency by 180° will also result in a phase shift of 180°. To address other harmonics, other phase shifts can be applied to reach similar results, e.g. 90° for harmonics comprising two times the carrier frequency. To address multiple harmonics at the same time, even more than two carriers with different phase shift can be used, e.g. four carriers with phase shift relative to the first of 0°, 90°, 180°, 270°. In the following description we will focus only on the case with 180° to explain the principle. In shifting the phase of the torque harmonics periodically by 180°, none or a minimum acceptable amount of torsional oscillations evolves as long as the time period for alternately applying the modulation schemes is small in relation to the time constant of the torsional modes in the mechanical system. In order to avoid possible adverse effects on the frequency spectrum resulting from the disclosed modulation schemes, a variable period clock 36 may be used to vary the time periods for applying the different modulation schemes.

In PWM converters using the disclosed methods and apparatuses the occurrence of torsional issues can be excluded, or substantially reduced because the two modulation schemes that are alternately applied cause torque harmonics that are phase shifted by 180°. If specific torque harmonics would cause an excitation of torsional oscillations in a rotor shaft assembly driven by the converter using the first carrier 32, then the subsequent modulation scheme with carrier 34 will dampen those same torsional oscillations.

If no damping in a mechanical system is assumed and subsequently applied electrical torques have the same frequency and amplitude, but a phase shift of 180°, then the resulting oscillating component of the torque will diminish. The same applies to a spectrum of torque harmonics with a phase shift of 180° between the harmonic components resulting from first and second modulation schemes described hereinabove (i.e., the resulting electrical torque over time at this frequency is zero). Real systems have mechanical damping, but the inventors have noted that basically the same results are achieved in weakly damped systems. As further explained below, in order to avoid adverse effects on the frequency spectrum resulting from this modulation scheme, variable time periods for applying the different modulation schemes can be applied.

Mechanical modeling of a large natural gas compressor drive train, designed for a nominal power of about 30 MVA, has been carried out using a sine wave excitation applied to the electric motor driving the compressor having an excitation frequency corresponding to a natural frequency of the drive train. The phase angle of the excitation was changed every half a second. It was observed in these numerical simulations that in real systems the resulting mechanical torque after n cycles of alternating excitation with 180° phase shift was not necessarily zero due to non-negligible mechanical damping or an excitation frequency that did not exactly match the natural frequency of the system. As such, the resulting mechanical torque lay in between the minimum and maximum value of the mechanical torque during the excitation phases. If the time period for exciting the electrical drive train with torque harmonics was reduced to sufficiently small values, the resulting mechanical torque was negligible, independent from the amplitude or frequency of the torque being applied to the mechanical system. In the simulations not one but several torque harmonics were applied to excite the drive train because these excitations were caused by the torque spectrum of a PWM modulated converter. One of the generated torque harmonics exactly matches the first natural frequency of the compressor train (at 20 Hz). The phase shift caused by the two modulation schemes was 180°. A time period for the two modulation schemes of 100 ms was used (which is sufficiently small to suppress torsional oscillations at the first natural frequency of 20 Hz).

Generated electrical torque includes many harmonics classified into at least three components, i.e.: (a) DC component; (b) Baseband harmonics, which are pulsating at a multiple of the fundamental frequency of the system (including the fundamental component); and (c) sideband harmonics with frequency, which are depending on the frequency of the carriers (switching frequency) and the frequency of the fundamental (operating point). A conventional PWM modulation block may receive a three-phase set reference from a high-level conventional control block and process the gating signal of the power converter, which includes an interface between the modulator and the power switches.

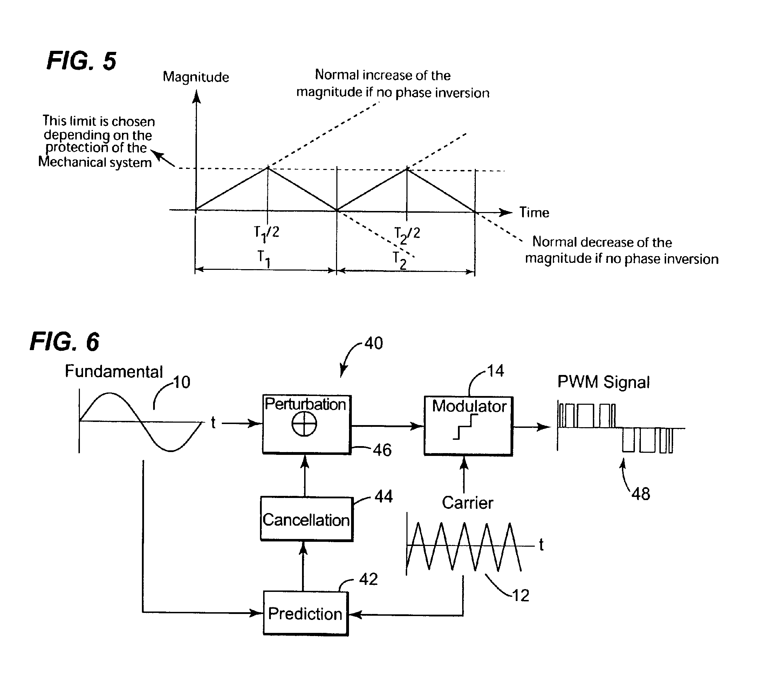

For some operating points at a given switching frequency, the motor torque applied to the shaft by the drive system might have some harmonics components which coincide with natural frequencies of the drive train. As understood by those of ordinary skill, in such system, the magnitude of the resulting torque in the shaft will linearly increase over time. As shown in FIG. 5, by use of two carrier signals, the phase of any chosen harmonics component of the pulsating torque can be inverted. In particular, a pulsating torque component that has the same harmonics as the most critical resonant frequency of the mechanical system may be inverted. In Fig 5, the typical behavior is shown. From time 0 to $T_1/2$, the first carrier is used and the mechanical system is excited and the amplitude of the mechanical oscillation is growing accordingly. From time instant $T_1/2$ to $T_1$, the second carrier signal is used. The phase of the exciting harmonic signal is inverted and the mechanical oscillation is excited in the inverse direction. Accordingly, the magnitude is reduced. This process is continuously repeated over time. This phase inversion will inverse the direction of the torque component, causing the torque value to swing at the natural frequency, but between defined boundaries, as shown in FIG. 5. As also shown, the magnitude of the torque can be controlled, and then limited to an acceptable value for the drive train. This limit will define the biggest period of the phase inversion. One supplement degree of freedom of the subject matter disclosed herein is the length of the period. As understood by those of ordinary skill, new torque harmonics might appear during operation of the phase-controlled PWM drive system 30, but with small amplitudes, which may be further minimized by varying the length of the period.

As those of ordinary skill will appreciate after reviewing the subject matter disclosed herein, the phase-controlled PWM drive system 30 solves torsional issues and may be applied without any feedback signal and be implemented in any PWM modulation strategy. In addition, it may also be realized as an add on in an existing PWM drive system and/or be adapted to any mechanical drive train with one or more resonant frequencies.

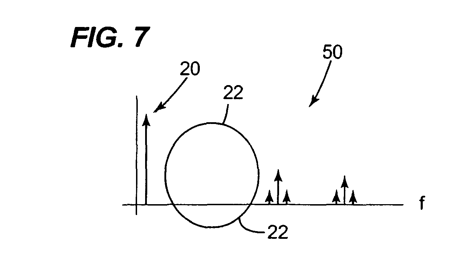

In another embodiment of the subject matter disclosed, apparatuses and methods are disclosed to substantially reduce or eliminate beat frequency harmonics in variable frequency power electronic converters operating with an asynchronous PWM strategy. FIG. 6 illustrates a PWM modulator 40 that includes a prediction block for the beat-frequencies 42 configured to predict unwanted harmonics based on calculations made online and/or offline. In the case of offline calculations the results may then be stored in look-up tables to allow for online implementation. A cancellation block 44 then provides a perturbation signal to a perturbation block 46, which removes the unwanted harmonics from the fundamental frequency reference signal 10 with minimum impact on other frequencies, as already explained. FIG. 7 shows a frequency spectrum 50 of the modified PWM signal 48 of FIG. 6. As shown, unwanted harmonic components 22 are substantially reduced and/or eliminated while the fundamental and non-critical higher order harmonics remain unaffected.

The frequency predictor 42 is using a deterministic relationship between the fundamental frequency of the reference signal and the PWM carrier frequency to predict beat frequency components. Since the number of beat frequency components are effectively finite to within some predefined threshold of amplitude, the disclosed apparatus and/or method avoids the generation of these beat frequencies of concern. Data are used in an online environment to generate additional perturbations to the modulation strategy, in such a way as to eliminate the beat frequency components. Applications of interest could include, but are not limited to converter drives for electric machines for compressors in the oil and gas industry, and frequency converters connected to generators in variable speed wind turbines.

One of the advantageous features of the subject matter disclosed relates to a method to adjust the reference signal to influence the PWM process to eliminate certain critical harmonics. As explained in conjunction with FIG. 6, the first step is to predict the unwanted harmonics if the reference signal is left unadjusted. The information required includes the frequency, amplitude and angle of the fundamental output signal. Calculations can be made online or made offline and may then stored in look-up tables. A cancellation block provides a perturbation signal to remove the unwanted harmonics with minimum impact on other frequency components. The perturbation signal is a weighted sum of sinusoidal waveforms. One method for achieving this is that for each harmonic to be cancelled, a sinusoidal waveform with the frequency, amplitude of the harmonic is added, where the phase angle is shifted by 180 degrees. Information on time delays and phase shifts due to the sampled nature of discrete-time devices may also be used. The perturbation is then added to the original reference signal and the updated reference is provided to the modulation process to generate the desired pulse patterns.

There are at least three reasons for the effectiveness of the apparatuses described and methods associated therewith. Firstly, the harmonics can be predicted accurately by mathematical formulas or by offline simulations or measurements and the PWM process is highly deterministic. Secondly, for the above method, the perturbation signal cancels the desired harmonics, but may introduce additional harmonics instead. However, the amplitudes of these harmonics are negligible. Thirdly, the method is applicable to asynchronous switching because the deterministic property of the PWM process is not dependent on periodicity of the combined carrier and fundamental patterns. The prediction step can be implemented online using well-known mathematical relationships derived for 2-level and higher level inverters (see e.g. McGrath, Brendan Peter & Holmes, Donald Grahame, An Analytical Technique for the Determination of Spectral Components of Multilevel Carrier-Based PWM Methods, IEEE Trans. Industrial Electronics, Vol. 49, No. 4, August 2002, pp. 847-857, the contents of which are incorporated herein in its entirety by reference). Alternatively the prediction step can be implemented using a combination of online and offline calculations. Another embodiment includes the generation of the pulse pattern directly and to avoid the PWM unit. Yet another embodiment includes knowledge of cancellation effects between converter phases and/or several interconnected converters to optimize across all inverters.

As those of ordinary skill will appreciate after their review of the subject matter disclosed, in the above-described apparatuses and associated methods, the PWM pulse pattern is modified to avoid generating certain harmonic components by modifying the reference signal in such a way as to obtain the desired pulse patterns free of undesired harmonics. The disclosed subject matter may be utilized with both synchronous and asynchronous switching, the latter being particularly important during start-up and transients. As such, critical harmonics at predefined frequencies are eliminated. The harmonics can be tracked when the fundamental and/or the carrier frequency are changing. In machine shaft systems, the disclosed subject matter prevents the excitation of resonant shaft modes by the converter and electrical machine and should not introduce any significant other harmonics into the torque signal. As those of ordinary skill will appreciate it, the scheme works with asynchronous pulse patterns. Hence it is not constrained to synchronous schemes with low pulse counts. This feature is particularly important during start-up and transients. Additional sensors are not required. The harmonic elimination scheme can be seamlessly implemented on existing drives, and turned on and off as required. The implementation and installation cost is low. In this method feedback is not needed. Rather than generating harmonics, measuring them with a sensor and feeding them back, they are avoided altogether right from the start. Hence, an additional sensor is not needed rendering the scheme, simple, cost effective, reliable and easy to implement and to maintain. Other advantages include that the device can be incorporated into existing PWM modulation schemes. The switching frequency is not changed. The reference perturbations do not influence outer control loops (such as, for example and not a limitation, speed control loops), and all protection circuits and loops remain unaffected. The method proposed works for any inverter topology (2 level, 3 level, and parallel threads to name a few examples), and for any machine (synchronous and/or asynchronous machines), any load or mechanical system, and at low speeds and high speeds.

As will be appreciated by those of ordinary skill in the applicable arts, methods of generating PWM discrete signals are also with the scope of the subject matter disclosed herein. In a first embodiment, these methods include generating the PWM discrete signal based on a reference signal and a first carrier signal. And, after a time period has elapsed, alternatively generating the PWM discrete signal based on the reference signal and a second carrier signal, the first carrier signal being out of phase from the second carrier signal and the time period being smaller than a time constant of a torsional mode of a mechanical system drive by the PWM discrete signal. In such methods, the time period may be made variable. In a second embodiment, these methods include calculating a beat frequency component of a mechanical system driven by the PWM discrete signal based on a fundamental output frequency and a frequency of a carrier signal, adding to a reference signal a perturbation signal based on the calculated beat frequency component, and generating the PWM discrete signal such that a beat frequency of a mechanical system driven by the PWM discrete signal is not excited. In such methods, the perturbation signal is a sinusoidal waveform having a frequency substantially equal to the beat frequency, a magnitude substantially equal to the magnitude of the beat frequency component, and a phase angle substantially shifted by 180° from a phase angle of the beat frequency component after taking into account the sum of phase delays in the system.

## Claims

1.  A PWM processor (30), comprising:

    a modulator unit (14) to generate a PWM signal to drive a mechanical system (24); and
    a carrier signal generator unit connected to a carrier signal input of the modulator unit, the carrier signal generator being configured to generate first and second carrier signals (32,34), wherein the modulator unit generates a PWM signal corresponding to a reference signal supplied thereto by alternately using the first and second carrier signals, and wherein the first carrier signal (32) is out of phase from the second carrier signal (34) so as to minimize undesirable torque harmonics on the mechanical system
    wherein the time period for alternately using the first and second carrier signals is small compared to the time constant of a torsional mode of the mechanical system (27).

2.  The PWM processor (30) according to claim 1, wherein the modulator unit (14) generates the PWM signal without any feedback signal from the mechanical system.

3.  The PWM processor (30) according to any preceding claim, comprising:

    a perturbation unit connected to the reference signal input of the modulator unit; and

a beat frequency component predicting unit connected to the perturbation unit, wherein a frequency component of the reference signal supplied to the perturbation unit corresponding to a beat frequency of the mechanical system is removed by adding to the reference signal a perturbation signal produced by the perturbation unit based on calculations made by the beat frequency component predicting unit such that the beat frequency of the mechanical system is not excited by the PWM signal produced by the modulator unit.

**4.** A method of generating a PWM signal, the method comprising:

generating the PWM signal based on a reference signal and a first carrier signal (32); and
after a time period, alternately generating the PWM signal based on the reference signal and a second carrier signal (34), wherein the first carrier signal is out of phase from the second carrier signal and the time period is smaller than the time constant of a torsional mode of a mechanical system (24) driven by the PWM signal, so as to minimize undesirable torque harmonics of the mechanical system.

**5.** The method according to claim 4, wherein the time period is variable.

**6.** The method according to claim 4 or claim 6, comprising:

calculating a beat frequency component of the mechanical system based on a fundamental output frequency and the frequency of a carrier signal (12);
adding to the reference signal a perturbation signal based on the calculated beat frequency component; and
generating the PWM signal such that a beat frequency of a mechanical system driven by the PWM signal is not excited.

**7.** The method according to claim 6, wherein the perturbation signal is a sinusoidal waveform having a frequency substantially equal to the beat frequency, a magnitude substantially equal to the magnitude of the beat frequency component, and a phase angle substantially shifted by 180° from a phase angle of the beat frequency component.

**Patentansprüche**

**1.** PWM-Prozessor (30), aufweisend:

eine Modulatoreinheit (14) zum Erzeugen eines PWM-Signals zum Antreiben eines mechanischen Systems (24); und
eine mit einem Trägersignaleingang der Modulatoreinheit verbundene Trägersignalgeneratoreinheit, wobei der Trägersignalgenerator dafür eingerichtet ist, ein erstes und ein zweites Trägersignal (32, 34) zu erzeugen, wobei die Modulatoreinheit ein PWM-Signal erzeugt, das einem ihr zugeführten Bezugssignal entspricht, indem abwechselnd das erste und das zweite Trägersignal verwendet werden, und wobei das erste Trägersignal (32) zu dem zweiten Trägersignal (34) phasenverschoben ist, um somit unerwünschte Drehmomentoberwellen in dem mechanischen System zu minimieren, wobei die Zeitperiode für die abwechselnde Verwendung des ersten und des zweiten Trägersignals im Vergleich zu der Zeitkonstante eines Torsionsmodus des mechanischen Systems (24) klein ist.

**2.** PWM-Prozessor (30) nach Anspruch 1, wobei die Modulatoreinheit (14) das PWM-Signal ohne jedes Rückkopplungssignal aus dem mechanischen System erzeugt.

**3.** PWM-Prozessor (30) nach einem der vorstehenden Ansprüche, aufweisend:

eine mit dem Bezugssignaleingang der Modulatoreinheit verbundene Störungseinheit; und
eine mit der Störungseinheit verbundene Schwebungsfrequenzkomponenten-Vorhersageeinheit, wobei eine einer Schwebungsfrequenz des mechanischen Systems entsprechende Frequenzkomponente des der Störungseinheit zugeführten Bezugssignals entfernt wird, indem dem Bezugssignal ein Störungssignal hinzugefügt wird, das von der Störungseinheit auf der Basis von Berechnungen erzeugt wird, die von der Schwebungsfrequenzkomponenten-Vorhersageeinheit dergestalt durchgeführt werden, dass keine Schwebungsfrequenz des mechanischen Systems durch das von der Modulatoreinheit erzeugte PWM-Signal angeregt wird.

**4.** Verfahren zum Erzeugen eines PWM-Signals, wobei das Verfahren die Schritte aufweist:

Erzeugen des PWM-Signals auf der Basis eines Bezugssignals und eines ersten Trägersignals (32); und nach einer Zeitperiode abwechselndes Erzeugen des PWM-Signals auf der Basis des Bezugssignals und eines zweiten Trägersignals (34), wobei das erste Trägersignal zu dem zweiten Trägersignal phasenverschoben ist und die Zeitperiode kürzer als die Zeitkonstante eines Torsionsmodus des durch das PWM-Signal gesteuerten mechanischen Systems (24) ist, um somit unerwünschte Drehmomentoberwellen des mechanischen Systems zu minimieren.

**5.** Verfahren nach Anspruch 4, wobei die Zeitperiode variabel ist.

**6.** Verfahren nach Anspruch 4 oder Anspruch 5, mit den Schritten:

Berechnen einer Schwebungsfrequenzkomponente des mechanischen Systems auf der Basis einer Grundausgangsfrequenz und der Frequenz eines Trägersignals (12);
Hinzufügen eines Störungssignals auf der Basis der berechneten Schwebungsfrequenzkomponente zu dem Bezugssignal; und
Erzeugen des PWM-Signals dergestalt, dass keine Schwebungsfrequenz eines von dem PWM-Signal gesteuerten mechanischen Systems angeregt wird.

**7.** Verfahren nach Anspruch 6, wobei das Störungssignal eine Sinuswellenform mit einer Frequenz im Wesentlichen gleich der Schwebungsfrequenz, mit einer Größe im Wesentlichen gleich der Größe der Schwebungsfrequenzkomponente und mit einem im Wesentlichen um 180 Grad gegenüber einem Phasenwinkel der Schwebungsfrequenzkomponente verschobenen Phasenwinkel ist.

## Revendications

**1.** Processeur PWM (30), comprenant :

une unité de modulation (14) pour générer un signal PWM afin de piloter un système mécanique (24); et
une unité de génération d'ondes porteuses connectée à une entrée d'onde porteuse de l'unité de modulation, l'unité de génération d'ondes porteuses étant configurée pour générer des première et seconde ondes porteuses (32, 34),
dans lequel l'unité de modulation génère un signal PWM correspondant à un signal de référence qui lui est fourni par utilisation alternée des première et seconde ondes porteuses, dans lequel la première onde porteuse (32) n'est pas en phase avec la seconde onde porteuse (34) de manière à minimiser des harmoniques de couple indésirables sur le système mécanique, et dans lequel la période de temps pour l'utilisation alternée des première et seconde ondes porteuses est petite par comparaison à la constante de temps d'un mode de torsion du système mécanique (24).

**2.** Processeur PWM (30) selon la revendication 1, dans lequel l'unité de modulation (14) génère le signal PWM sans aucun signal de rétroaction provenant du système mécanique.

**3.** Processeur PWM (30) selon l'une quelconque des revendications précédentes, comprenant :

une unité de perturbation connectée à l'entrée de signal de référence de l'unité de modulation; et
une unité de prédiction de composante de fréquence de battement connectée à l'unité de perturbation,
dans lequel une composante de fréquence du signal de référence fourni à l'unité de perturbation correspondant à une fréquence de battement du système mécanique est supprimée par addition au signal de référence d'un signal de perturbation produit par l'unité de perturbation sur la base de calculs effectués par l'unité de prédiction de composante de fréquence de battement de telle manière que la fréquence de battement du système mécanique ne soit pas excitée par le signal PWM produit par l'unité de modulation.

**4.** Procédé de génération d'un signal PWM, le procédé comprenant :

la génération du signal PWM sur la base d'un signal de référence et d'une première onde porteuse (32); et
après une période de temps, la génération alternée du signal PWM sur la base du signal de référence et d'une seconde onde porteuse (34),
dans lequel la première onde porteuse n'est pas en phase avec la seconde onde porteuse et la période de temps est plus petite que la constante de temps d'un mode de torsion d'un système mécanique (24) piloté par le signal PWM, de manière à minimiser des harmoniques de couple indésirables du système mécanique.

5. Procédé selon la revendication 4, dans lequel la période de temps est variable.

6. Procédé selon la revendication 4 ou la revendication 5, comprenant :

le calcul d'une composante de fréquence de battement du système mécanique sur la base d'une fréquence de sortie fondamentale et de la fréquence d'une onde porteuse (12);
l'addition au signal de référence d'un signal de perturbation basé sur la composante de fréquence de battement calculée; et
la génération du signal PWM de telle manière qu'une fréquence de battement d'un système mécanique piloté par le signal PWM ne soit pas excitée.

7. Procédé selon la revendication 6, dans lequel le signal de perturbation est une forme d'onde sinusoïdale ayant une fréquence sensiblement égale à la fréquence de battement, une amplitude sensiblement égale à l'amplitude de la composante de fréquence de battement, et un angle de phase sensiblement décalé de 180° par rapport à un angle de phase de la composante de fréquence de battement.

FIG. 1

Fundamental

8

14

Modulator

PWM Signal

t

10

Carrier

t

12

16

FIG. 2

Reference signals from high level conventional control

10

18

8

Conventional PWM Modulator

16

22

Mechanical load

20

M

24

=

~

## FIG. 3

## FIG. 4

Carrier 1  32

Carrier 2  34

Variable Period Clock  36

Reference signals from high level conventional control

Conventional PWM Modulator

Mechanical load

M

30

19

20

22

## FIG. 5

Magnitude

Normal increase of the
magnitude if no phase inversion

This limit is chosen
depending on the
protection of the
Mechanical system

Time

$T_1/2$

$T_1$

$T_2/2$

$T_2$

Normal decrease of the
magnitude if no phase inversion

## FIG. 6

Fundamental

10

40

14

PWM Signal

t

Perturbation

⊕

46

Modulator

48

Cancellation

44

Carrier

Prediction

42

t

12

EP 2 073 374 B1

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040207360 A

**Non-patent literature cited in the description**

- **McGrath ; Brendan Peter ; Holmes ; Donald Grahame.** An Analytical Technique for the Determination of Spectral Components of Multilevel Carrier-Based PWM Methods. *IEEE Trans. Industrial Electronics,* August 2002, vol. 49 (4), 847-857